# EUROPÄISCHE PATENTSCHRIFT

(11) **EP 2 451 287 B1**
(45) Veröffentlichungstag und Bekanntmachung des Hinweises auf die Patenterteilung: **15.10.2014**
(21) Anmeldenummer: 10734041.6
(22) Anmeldetag: 09.07.2010
(51) Int. Cl.: A01N 59/06, A01P 1/00

(54) **ZUSAMMENSETZUNGEN UND VERFAHREN ZUR PRÄVENTION UND BEHANDLUNG VON FEUERBRAND**
COMPOSITION AND METHOD FOR THE PREVENTION OF FIREBLIGHT
COMPOSITION ET PROCEDE DE PREVENTION DU FEU BACTERIEN

(30) Priorität: 10.07.2009 DE 102009032895
(43) Veröffentlichungstag der Anmeldung: 16.05.2012
(73) Patentinhaber: Chevita Tierarzneimittel GmbH, 85276 Pfaffenhofen (DE)
(72) Erfinder: ABELE, Ulf, 86558 Hohenwart (DE); SIEBENLIST, Hans, 85301 Schweitenkirchen (DE)
(74) Vertreter: Franke, Dirk
(86) Internationale Anmeldenummer: PCT/EP2010/004193
(87) Internationale Veröffentlichungsnummer: WO 2011/003620

(56) Entgegenhaltungen:
- DE-A1- 3 629 385
- DE-B- 1 035 395
- US-A- 3 983 214

## Beschreibung

### Gebiet der Erfindung

Die Erfindung betrifft Zusammensetzungen, die zur Behandlung und/oder zur Vorbeugung von Feuerbrand-Erkrankungen an Pflanzen oder Pflanzenbestandteilen verwendet werden können, deren Herstellungsverfahren, Konzentrate zur Herstellung der Zusammensetzungen sowie Verwendungen und Verfahren, welche auf den Zusammensetzungen aufbauen.

### Hintergrund der Erfindung

Feuerbrand ist eine durch das Bakterium *Erwinia amylovora* hervorgerufene Pflanzenerkrankung, die insbesondere im Obstbau weltweit jährlich hohe kommerzielle Schäden verursacht. Die Erkrankung verbreitet sich schnell und ist mit bisherigen Mitteln nur sehr schwer unter Kontrolle zu bringen.

Bekannte Merkmale für das Auftreten der Erkrankung sind die dunkelbraun bis schwarz gefärbten Stiele der bereits abgestorbenen Blüten und Blätter in der Nähe der erkrankten Zweige und die dunkel gefärbten Hauptadern an den Blättern. Im Frühjahr und Sommer treten feuchte, zunächst farblose, später braun gefärbte, klebrige Tröpfchen an den befallenen Trieben, Früchten und an den Blattunterseiten auf. Diese infektiösen Bakterienschleime (sogenannte Exsudate) werden vor allem bei feuchten und warmen Bedingungen gebildet.

Zur Behandlung von bereits aufgetretenem Feuerbrand werden traditionell die befallenen Pflanzenteile abgetrennt und anschließend verbrannt oder es werden Antibiotika enthaltende Pflanzenschutzmittel, wie beispielsweise Streptomycin-Präparate, flächendeckend eingesetzt. Während das Verbrennen meist nur begrenzte Wirkung zeigt und nur bei vollständiger Entsorgung aller befallenen Pflanzenteile ein Rückfall der Erkrankung überhaupt vermieden werden kann, ist der Einsatz von Antibiotika unter vielen Gesichtspunkten problematisch. Zum einen ist bei der Verwendung von Antibiotika in Obstbaumplantagen aus lebensmitteltechnischen Gesichtspunkten eine aufwändige Rückstandskontrolle in den behandelten Pflanzen sowie dem mit den Bäumen hergestellten Obst dringend geboten, da für die Verbraucher sichergestellt werden muss, dass das Obst selber frei von Antibiotika ist. Zum anderen besteht die Gefahr der Bildung von sogenannten Antibiotika-Resistenzen in den Bakterienstämmen, beispielsweise wenn die Antibiotika unsachgemäß über längere Zeiträume in zu geringen Konzentrationen aufgetragen wurden.

Problematisch ist die Verwendung von Antibiotika enthaltenden Pflanzenschutzmitteln auch dann, wenn in der Nähe der Obstbaumplantagen beispielsweise Imkereibetriebe Honig produzieren. Antibiotika können dabei von den Arbeitsbienen aufgenommen werden und erscheinen dann als unerwünschter Rückstand in dem von den Bienen hergestellten Honig.

Es sind bereits einige antibiotikafreie Mittel im Stand der Technik bekannt, die zur Behandlung und Vorbeugung des Feuerbrandes mehr oder weniger gut geeignet sind. Die Druckschriften WO 20051048717, CA 2291984 und US 4569841 offenbaren biotechnologische bzw. fermentative Verfahren zur Behandlung von Feuerbrand. Schließlich offenbaren die Druckschriften WO 021052942 und EP 0 565 266 Zusammensetzungen aus anorganischen Substanzen zur Behandlung von Feuerbrand.

Die WO 2005/099454 beschreibt Wirkstoffkombinationen, die aus einem Valinamid-Derivat, einem Phosphonat und Folpet bestehen und zur Bekämpfung von phytophathogenen Pilzen und Bakterien eingesetzt werden. In den Beispielen werden Zusammensetzungen mit Fosetyl-Al (Aliette) als Wirkstoff verwendet, welches Aluminium gebunden an einen Ethylphosphonatrest enthält. Jedoch beträgt die Konzentration des in diesen Zusammensetzungen enthaltenen Fosetyl-Al nur maximal 250 mg/L (siehe Tabelle 1 auf Seite 21), was einer Konzentration von etwa 0,7 mmol/L Aluminium entspricht. Das wirksame Prinzip von Fosetyl-Al beruht auf einer systemischen Umwandlung in Phosphonsäure und einer Erhöhung der Widerstandskraft der Pflanze gegen pilzliche und bakterielle Schadorganismen. Zudem wird in der WO 2005/099454 kein pH-Wert der Zusammensetzungen angegeben.

Ferner offenbaren die Druckschriften DD-A 273 192, JP-A 63099005 und GB-A 1315430 Behandlungs- und Vorbeugeverfahren unter Verwendung von bekannten Antibiotika. Die Druckschriften GB 1049116, JP 1090102, US 5,686,389, EP 1 075 185, EP 0 158 074, EP 1 300 078 und DE 3640048 offenbaren andere organische Verbindungen mit Wirksamkeit gegen Feuerbrand.

Keine der zitieren Dokumente offenbart jedoch eine Zusammensetzung, welche eine sehr gute Wirksamkeit in der Behandlung und Vorbeugung von Feuerbrand besitzt und gleichzeitig ökologisch unbedenklich und für die Herstellung von Nahrungsmitteln gesundheitlich unproblematisch ist. Zudem offenbart keines dieser Dokumente eine Zusammensetzung, welche Aluminium(III)-Ionen unter Verwendung der in den Patentansprüchen definierten Konzentrationen und dem spezifischen pH-Wert enthält.

### Aufgabe und Kurzdarstellung der Erfindung

Der vorliegenden Erfindung liegt deshalb die Aufgabe zugrunde, Zusammensetzungen sowie Mittel und Verfahren zu deren Herstellung bereitzustellen, die zur Behandlung und/oder zur Vorbeugung von Feuerbrand-Erkrankungen in Obst- und/oder Ziergehölzen verwendet werden können, und welche die oben genannten Nachteile gegenüber den Pflanzenschutzmitteln des Standes der Technik beseitigen.

Diese Aufgabe wird durch die in den Patentansprüchen definierten Zusammensetzungen, deren Herstellungsverfahren, die erfindungsgemäßen Konzentrate zur Herstellung der Zusammensetzungen und die Verwendungen und Verfahren, welche auf den Zusammensetzungen aufbauen, gelöst.

Überraschenderweise haben die Erfinder der vorliegenden Erfindung herausgefunden, dass mit den so definierten Zusammensetzungen ein Befall von Pflanzen oder Pflanzenbestandteilen mit Schädlingen, wie insbesondere ein Befall mit dem Bakterium *Erwinia amylovora* (sogenannte Feuerbrand-Erkrankung), besonders wirkungsvoll verhindert oder bekämpft werden kann, ohne dass das Wachstum, die Fruchtbildung oder der Metabolismus der Pflanzen, insbesondere der Obstbäume, wesentlich beeinträchtigt wird. Die Zusammensetzung enthält dabei keine die Umwelt schädigenden organischen Substanzen oder schwer abbaubare Pestizide und weist so eine hohe Bioverträglichkeit auf.

Überraschenderweise ist es auch möglich, die erfindungsgemäßen Zusammensetzungen ohne Gesundheitsrisiko für den Menschen großflächig zu zerstäuben und auf die Pflanzen bzw. die Pflanzenbestandteile aufzutragen, ohne dass das Tragen eines Mund- oder Gesichtsschutzes notwendig wäre. Die Zusammensetzungen stellen mit anderen Worten besonders milde und umweltverträgliche Pflanzenschutzmittel dar, wobei deren Einsatz in Obstbaumplantagen in hohem Maße arbeitsplatzrechtlichen Sicherheitsbestimmungen genügen wird.

### Detaillierte Beschreibung der Erfindung

In einem ersten Aspekt betrifft die vorliegende Erfindung eine Zusammensetzung, welche Aluminium(III)-Ionen in einer Konzentration im Bereich von 5 bis 60 mmol/L in wässriger Lösung enthält. Die Zusammensetzung weist einen pH-Wert im Bereich von 3,0 bis 5,0 auf und ist vorzugsweise zur Behandlung und/oder Vorbeugung des Feuerbrandes geeignet.

Es hat sich überraschenderweise herausgestellt, dass eine Zusammensetzung mit den so definierten Merkmalen, einen Befall von Pflanzen oder Pflanzenbestandteilen mit Schädlingen, wie beispielsweise mit dem Bakterium *Erwinia amylorova,* wirkungsvoll verhindern oder bei bereits aufgetretenem Befall wirkungsvoll behandeln kann. Mit anderen Worten ist die erfindungsgemäße Zusammensetzung als Pflanzenschutzmittel verwendbar.

Überdies haben die Erfinder der vorliegenden Erfindung überraschenderweise herausgefunden, dass die Wirksamkeit der Zusammensetzung beim Einsatz gegen eine Feuerbrand-Erkrankung an Obstbäumen gegeben ist, wenn die Konzentration an Aluminium(III)-Ionen mindestens 5 mmol/L beträgt. Auf der anderen Seite hat sich gezeigt, dass keine nachteiligen Wirkungen auf die Pflanzen bzw. die Pflanzenbestandteile zu beobachten ist, wenn die Konzentration an Aluminium(III)-Ionen 60 mmol/L nicht übersteigt. Vorzugsweise liegt die Konzentration an Aluminium(III)-Ionen zwischen 15 und 40 mmol/L, besonders bevorzugt zwischen 25 und 40 mmol/L, da in diesen Bereichen die nachteiligen Wirkungen auf die Pflanzen bzw. Pflanzenbestandteile minimal sind, während gleichzeitig eine hervorragende Wirksamkeit gegenüber dem Bakterium *Erwinia amylovora* erzielt werden kann.

Als Gegenionen sind in der Zusammensetzung vorzugsweise Sulfat-Ionen enthalten. Die Konzentration der Sulfat-Ionen beträgt in diesem Fall 7,5 bis 120 mmol/L, vorzugsweise zwischen 30 und 80 mmol/L, besonders bevorzugt zwischen 50 und 70 mmol/L, enthalten. Die Verwendung von Sulfat-Ionen hat den Vorteil, dass das Aluminium nicht als schwerlösliches Salz aus der wässrigen Lösung ausfallen kann.

Zur Einstellung eines pH-Wertes auf einen Bereich von 3,0 bis 5,0 enthält die Zusammensetzung überdies vorzugsweise weitere Kationen, vorzugsweise Kalium- oder Natrium-Ionen in einer Konzentration von 5 bis 60 mmol/L, vorzugsweise von 15 bis 40 mmol/L, besonders bevorzugt von 25 bis 40 mmol/L. Wenn die Zusammensetzung Kalium- oder Natrium-Ionen in diesen Konzentrationen enthält, kann der pH-Wert der wässrigen Lösung leicht auf den bevorzugten Bereich eingestellt werden. Kalium- und Natrium-Ionen sind hinsichtlich der Bioverträglichkeit und aus arbeitsrechtlichen Gesichtspunkten unbedenklich.

In einer bevorzugten Ausführungsform enthält die Zusammensetzung zusätzlich ein Feuchthaltemittel.

Als Feuchthaltemittel sind genannt: Glycerin, Propylenglykol, Polyethylenglykol, Natriumlactat, Kaliumlactat, Calciumlactat, Sorbit, Xylit, Glycerin, Maltit, Invertase, Polydextrose, Magnesiumchlorid-6-hydrat (Magnesiumchlorid-Hexahydrat), Ammoniumchlorid und deren Hydrate, Calciumchlorid und deren Hydrate, Calciumnitrat und deren Hydrate oder Gemische zweier oder mehrerer dieser Substanzen. In der Regel ist das Feuchthaltemittel ein hygroskopisches Salz oder eine hygroskopische organische Verbindung. Vorzugsweise enthält die Zusammensetzung Magnesiumchlorid-6-hydrat in einer Konzentration im Bereich von 2 bis 40 mmol/L als Feuchthaltemittel. Bevorzugter liegt die Konzentration des Feuchthaltemittels im Bereich von 10 bis 35 mmol/L und besonders bevorzugt im Bereich von 20 bis 30 mmol/L. Idealerweise bildet das Feuchthaltemittel keine schwerlöslichen Salze mit den in der Zusammensetzung ebenfalls enthaltenen Aluminium(III)-Ionen, so dass alle wirksamen Bestandteile der Zusammensetzung auch bei längerer Lagerung oder Einwirkung von Wärme und/oder Kälte in Lösung bleiben.

Das Feuchthaltemittel bewirkt, dass die Zusammensetzung nach dem Aufbringen auf die Pflanzen oder die Pflanzenbestandteile über einen längeren Zeitraum auf die bakteriellen Schädlinge einwirken kann und so insgesamt eine bessere und längere Wirksamkeit erzielt werden kann.

Vorzugsweise enthält die Zusammensetzung zusätzlich ein Spreitmittel in einer Konzentration im Bereich von 0,0025 bis 2 g/L, vorzugsweise im Bereich von 0,01 bis 1 g/L, besonders bevorzugt bei einer Konzentration von 0,5 g/L.

Unter Spreitmittel werden Mittel verstanden, die die Verteilbarkeit der Zusammensetzung auf den Pflanzen bzw. Pflanzenbestandteilen erhöhen können. Beispielhafte Spreitmittel, welche in der Zusammensetzung enthalten sein können, sind Silikonöle verschiedener Viskosität; Fettsäureester, wie beispielsweise Ethylstearat, Laurinsäurehexylester, Dipropylenglykolpelargonat, Ester verzweigter Fettsäuren mittlerer Kettenlänge mit gesättigten C₁₆-C₁₈-Fettalkoholen, wie beispielsweise Isopropylmyristat, Isopropylpalmitat, Capryl/Caprinsäureester von gesättigten Fettalkoholen der Kettenlänge C₁₂-C₁₈, Isopropylstearat, Ölsäuredecylester, Ölsäureoleylester, wachsartige Fettsäureester, Adipinsäurediisopropylester, Capryl/Caprinsäuretriglyceride, Triglyceridgemische mit Pflanzenfettsäuren der Kettenlänge C₈-C₁₂ oder anderen speziell ausgewählten natürlichen Fettsäuren, Partialglyceridgemische gesättigter oder ungesättigter eventuell auch hydroxylgruppenhaltiger Fettsäuren, Monoglyceride der C₈-C₁₀-Fettsäuren, Isopropylmyristat, Isopropylstearat, Isopropylpalmitat, Laurinsäurehexylestern, Ölsäuredecylester, Dibutylstearat, Dibutylsebacat, Paraffinöl, Ethylhexylpalmitat/Stearat, Ethylhexylpalmitat/Isotridecylstearat, Isopropylmyristat-Isopropylpalmitat-Isopropylstearat-Gemische und deren Kombinationen.

Das Spreitmittel ist vorzugsweise ein nicht-ionisches, kationisches oder amphoteres Tensid. Beispielsweise kann das Tensid ein anionisches Tensid sein, welches aus der Gruppe, bestehend aus Alkylsulfat, Alkylethersulfat, Alkylarylsulfonat, Alkylsuccinat, Alkylsulfosuccinat, N-Alkoylsarkosinat, Acyltaurat, Acylisethionat, Alkylphosphat, Alkyletherphosphat, Alkylethercarboxylat, Alpha-Olefinsulfonat, insbesondere Alkali- und Erdalkalimetallsalze, wie beispielsweise Natrium-, Kalium-, Magnesium-, Calcium-, sowie Ammonium- und TriethanolaminSalze, ausgewählt ist. Die Alkylethersulfate, Alkyletherphosphate und Alkylethercarboxylate können jeweils beispielsweise zwischen 1 bis 10 Ethylenoxid- oder Propylenoxid-Einheiten, vorzugsweise 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat und Triethanolamindodecylbenzolsulfonat.

Vorzugsweise ist das Spreitmittel jedoch ein nicht-ionisches Tensid. Beispiele für nicht-ionische Tenside, die in der erfindungsgemäßen Zusammensetzung enthalten sein können, umfassen Saccharoseester (Sucroseester), insbesondere Mono-, Di- und Triester von Saccharose mit Fettsäuren, Lecithine, insbesondere Phosphatidylcholine, Phosphatidylethanolamine und Phosphatidylinositole, Polyalkylenglykolether, Fettalkoholethoxylate, Fettalkoholpropoxylat, Alkylglucoside, Alkylpolyglucoside, Octylphenolethoxylat und Nonylphenolethoxylat und Kombinationen davon. In einer besonders bevorzugten Ausführungsform ist das Spreitmittel polyethoxyliertes Rizinusöl. Ein besonders bevorzugtes polyethoxyliertes Rizinusöl wird unter der Bezeichnung Cremophor EL kommerziell vertrieben. Besonders bevorzugte Spreitmittel hinsichtlich guter Bioverträglichkeit und Umweltfreundlichkeit sind Saccharoseester, insbesondere Mono-, Di- und Triester von Saccharose mit Fettsäuren, und Lecithine, insbesondere Phosphatidylcholine, Phosphatidylethanolamine und Phosphatidylinositole.

Zusammensetzungen, welche Spreitmittel enthalten, haften besonders gut auf den Pflanzen und Pflanzenbestandteilen und erhöhen so die Wirksamkeit der Zusammensetzungen. Vorzugsweise ist das Spreitmittel gut wasserlöslich.

In einer bevorzugten Ausführungsform enthält die Zusammensetzung 5 bis 60 mmol/L Aluminium(III)-Ionen, 2 bis 40 mmol/L Feuchthaltemittel und 0,0025 bis 2 g/L Spreitmittel in wässriger Lösung bei einem pH-Wert im Bereich von 3,0 bis 5,0, vorzugweise bei einem pH-Wert im Bereich von 3,3 bis 4,0.

Es hat sich herausgestellt, dass Zusammensetzungen, die einen wie oben definierten pH-Wert aufweisen, auch bei Lagerung über einen längeren Zeitraum von mehreren Wochen oder Monaten stabil sind und aus diesen Zusammensetzungen Aluminium(III)-Ionen nicht als Salze während der Lagerung ausfallen. Gleichzeitig weisen die Zusammensetzungen eine hohe Wirksamkeit bei der Behandlung von Feuerbrand bei Obstbäumen auf.

Die Zusammensetzung kann zusätzlich ein oder mehrere Benetzungsmittel enthalten, wie beispielsweise Alkali-, Erdalkali- und Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohole, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Hinsichtlich der Konzentration des Benetzungsmittels, sofern enthalten, können die Zusammensetzungen 0,01 bis 8, vorzugsweise 0,2 bis 6, besonders bevorzugt 0,3 bis 5 und insbesondere 0,5 bis 3 Gew.-% Benetzungsmitteln enthalten.

Die Zusammensetzung kann zusätzlich einen oder mehrere Emulgatoren enthalten, wie beispielsweise Natrium-, Kalium- und Ammoniumsalze von gradkettigen aliphatischen Carbonsäuren der Kettenlänge C₁₂-C₂₀, Natriumhydroxyoctadecansulfonat, Natrium-, Kalium- und Ammoniumsalze von Hydroxyfettsäuren der Kettenlänge C₁₂-C₂₀ und deren Sulfierungs- bzw. Acetylierungsprodukte, Alkylsulfate, auch als Triethanolaminsalze, Alkyl(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-ester mit Polyethylenglykolethern von einwertigen aliphatischen Alkoholen der Kettenlänge C₁₀-C₂₀ (Di-Natriumsalz), Sulfobernsteinsäure-4-ester mit Polyethylenglykolnonylphenylether (Di-Natriumsalz), Sulfobernsteinsäurebiscyclohexylester (Natriumsalz), Ligninsulfonsäure sowie deren Calcium-, Magnesium-, Natrium- und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Bevorzugte Emulgatoren sind Natriumlaurylsulfat, Natriumlaurylethersulfat, ethoxyliert (3 Ethylenoxidgruppen), die Polyethylenglykol(4-20)ether des Oleylalkohols sowie die Polyethenoxid-(4-14)ether von Nonylphenol. Hinsichtlich der Konzentration der Emulgatoren, sofern enthalten, können die Zusammensetzungen 0,01 bis 15, vorzugsweise 0,2 bis 8, besonders bevorzugt 0,5 bis 6 und insbesondere 1 bis 5 Gew.-% Emulgatoren enthalten.

Die Zusammensetzung kann zusätzlich ein oder mehrere Dispergiermittel, wie beispielsweise Alkylphenolpolyglycolether, enthalten. Hinsichtlich der Konzentration der Dispergiermittel, sofern enthalten, können die Zusammensetzungen beispielsweise 0,01 bis 8, vorzugsweise 0,1 bis 6, besonders bevorzugt 0,2 bis 5 und insbesondere 0,4 bis 3 Gew.-% Dispergiermittel enthalten.

Die Zusammensetzung kann zusätzlich einen oder mehrere Stabilisatoren, wie beispielsweise Cellulose oder Cellulosederivate, enthalten. Hinsichtlich der Konzentration der Stabilisatoren, sofern enthalten, können die Zusammensetzungen 0,01 bis 6, vorzugsweise 0,01 bis 3, besonders bevorzugt 0,01 bis 2 und insbesondere 0,01 bis 1 Gew.-% Stabilisatoren enthalten.

Die Zusammensetzung kann zusätzlich ein oder mehrere Haftmittel, wie Carboxymethylcellulose, natürliche und synthetische pulverförmige, körnige oder latexförmige Polymere, wie *Gummi arabicum*, Polyvinylalkohol, Polyvinylacetat, natürliche Phospholipide, wie Kephaline und Lecithine, und synthetische Phospholipid sowie Paraffinöle, enthalten. Hinsichtlich der Konzentration der Haftmittel, sofern enthalten, können die Zusammensetzungen 0,01 bis 8, vorzugsweise 0,1 bis 4, besonders bevorzugt 0,2 bis 3 und insbesondere 0,2 bis 2 Gew.-% Haftmittel enthalten.

Die Zusammensetzung kann zusätzlich ein oder mehrere organische Lösungsmittel, wie beispielsweise ein- oder mehrwertige Alkohole, Ester, Ketone und Kohlenwasserstoffe, wie beispielsweise Paraffine, Erdölfraktionen, mineralische und pflanzliche Öle, Butanol oder Glykol sowie deren Ether und Ester, Ketone, wie beispielsweise Aceton, Methylethylketon, Methylisobutylketon oder Cyclohexanon, enthalten. Hinsichtlich der Konzentration der organischen Lösungsmittel, sofern enthalten, können die Zusammensetzungen 0,01 bis 25, vorzugsweise 0,2 bis 12, besonders bevorzugt 0,5 bis 7 und insbesondere 1 bis 4 Gew.-% organische Lösungsmittel enthalten.

Die Zusammensetzung kann zusätzlich ein oder mehrere Duft- oder Farbstoffe, wie anorganische Pigmente, wie beispielsweise Eisenoxid, Titanoxid, Ferrocyanblau, organische Farbstoffe, wie beispielsweise Alizarin-, Azo- und Metallphthalocyaninfarbstoffe und Spurennährstoffe, wie beispielsweise Salze von Eisen, Mangan, Bor, Kupfer, Kobalt, Molybdän und Zink, enthalten. Hinsichtlich der Konzentration der Duft- oder Farbstoffe, sofern enthalten, können die Zusammensetzungen 0,001 bis 4, vorzugsweise 0,01 bis 1, besonders bevorzugt 0,01 bis 0,8 Gew.-% Duft- oder Farbstoffe enthalten.

Die Zusammensetzung kann zusätzlich ein oder mehrere Entstaubungsmittel, wie beispielsweise Polyglykole und Polyglykolether, enthalten. Hinsichtlich der Konzentration der Entstaubungsmittel, sofern enthalten, können die Zusammensetzungen 0,01 bis 2, vorzugsweise 0,05 bis 1, besonders bevorzugt 0,1 bis 0,5 Gew.-% Entstaubungsmittel enthalten.

Die Zusammensetzung kann zusätzlich ein oder mehrere Puffersubstanzen, Puffersysteme oder pH-Wert-Regulatoren enthalten. Hinsichtlich der Konzentration der Puffersubstanzen, Puffersysteme oder pH-Wert-Regulatoren, sofern enthalten, können die Zusammensetzungen 0,01 bis 10, vorzugsweise 0,1 bis 5 Gew.-% an Puffersubstanzen, Puffersysteme oder pH-Wert-Regulatoren enthalten.

Die Zusammensetzung kann zusätzlich weitere wirksame Bestandteile, wie Bakterizide, Fungizide, Insektizide, Akarizide und Wachstumsregulatoren, einzeln oder in Kombinationen davon enthalten. Vorzugsweise enthalten die Zusammensetzungen keine bis maximal 10 Gew.-% weitere wirksame Bestandteilen, besonders bevorzugt keine bis maximal 2 Gew.-% weitere wirksame Bestandteilen, insbesondere jedoch keine weiteren wirksamen Bestandteile.

In einer bevorzugten Implementierung ist die Zusammensetzung frei von Phosphor enthaltenden Verbindungen. Insbesondere enthalten die erfindungsgemäßen Zusammensetzungen vorzugsweise keine Phosphor enthaltenden Verbindung, die durch Metabolismus in Pflanzen in Phosphonsäure oder deren Derivate umgewandelt werden können.

Es hat sich überraschenderweise gezeigt, dass mit den so definierten Zusammensetzungen Pflanzen oder Pflanzenbestandteile auch gegenüber einem Befall durch Pilze aus der Gruppe der Oomyceten behandelt oder geschützt werden können, ohne dass bei jahreszeitlich später Auftragung ab Juli phosphonsäurehaltige Rückstände in den Pflanzen bzw. Pflanzenbestandteilen nachgewiesen werden können. Zudem setzen die Zusammensetzung keine phosphonsäurehaltigen Verbindungen frei, die potentiell wassergefährdende Eigenschaften aufweisen. Phosphonsäure wird nach deutschen Richtlinien in der Wassergefährdungsklasse (WGK) 1, d.h. als schwach wassergefährdend, eingestuft.

In einer bevorzugten Ausführungsform ist die erfindungsgemäße Zusammensetzung ein Pflanzenschutz- oder Schädlingsbekämpfungsmittel. Mit anderen Worten kann die Zusammensetzung zum Schutz oder zur Behandlung einer Pflanze oder eines Pflanzenbestandteils gegenüber phytophathogenen Pilzen, Bakterien und/oder Viren eingesetzt werden.

Die vorliegende Erfindung umfasst zudem ein Konzentrat, welches zur Herstellung der Zusammensetzung geeignet ist. Das Konzentrat enthält ein Aluminiumsalz, ein Spreitmittel und ein Feuchthaltemittel. Vorzugsweise ist das Konzentrat gut wasserlöslich. Auf diese Weise kann es leicht in die erfindungsgemäße Zusammensetzung überführt werden.

Das Konzentrat ermöglicht eine effiziente Lagerung des Pflanzenschutzmittels, welches leicht vor Ort in Wasser gelöst und so in eine für die Auftragung auf Pflanzen oder Pflanzenbestandteilen geeignete Form überführt werden kann. Das Konzentrat ist idealerweise über längere Zeiträume, d.h. über mehrere Wochen oder Monate, ohne strukturelle Veränderungen lagerfähig. Durch die Formulierung als Konzentrat können die Kosten sowohl bei Lagerung als auch beim Transport im Vergleich zur einsatzbereiten wässrigen Zusammensetzung signifikant reduziert werden. Vorteilhafterweise ist auch das Konzentrat beim Berühren mit der Haut nicht gesundheitsschädlich.

Das Konzentrat kann beispielsweise als festes Konzentrat, wie beispielsweise als Pulver, Pellets, Granulat, Kapseln oder Tabletten, oder als halbfestes oder flüssiges Konzentrat, wie beispielsweise als Gel, Flüssigkonzentrat oder Suspension, je nach Wunsch auch portionsweise formuliert und abgepackt, vorliegen. Besonders bevorzugt im Hinblick auf gute Transport- und Lagerfähigkeit ist ein granuliertes Konzentrat, insbesondere ein staubfreies Mikrogranulat, welches leicht in Wasser löslich ist.

In einer bevorzugten Ausführungsform enthält die Zusammensetzung Kaliumaluminiumsulfat-12-hydrat (Kaliumaluminiumsulfat-Dodecahydrat), Magnesiumchlorid-6-hydrat und Spreitmittel. Besonders bevorzugt ist ein Konzentrat, welches 50 bis 80 Gew.-% Kaliumaluminiumsulfat-12-hydrat, 10 bis 40 Gew.-% Magnesiumchlorid-6-hydrat und 0,1 bis 10 Gew.-% Spreitmittel enthält.

Ein solches Konzentrat kann leicht durch Auflösen in Wasser in eine für die Auftragung auf Pflanzen oder Pflanzenbestandteilen geeignete Zusammensetzung überführt werden, ohne dass dabei der pH-Wert korrigiert werden muss.

Die Erfindung umfasst in einem weiteren Aspekt ein Herstellungsverfahren für eine erfindungsgemäße Zusammensetzung. Das Herstellungsverfahren umfasst dabei zunächst einen Schritt des Verdünnens eines erfindungsgemäßen Konzentrates durch Zugabe von Wasser, welches vorzugsweise unter Rühren durchgeführt wird. Optional kann das Herstellungsverfahren in einem weiteren Schritt das Einstellen des pH-Wertes auf einen Bereich von 3,0 bis 5,0 umfassen.

Als Verdünnungsmittel kann dabei jede beliebige Form von Wasser verwendet werden, beispielsweise Leitungswasser, Regenwasser oder ungereinigtes oder gereinigtes Oberflächenwasser, welches aus Gewässern oder Flüssen entnommen werden kann. Der pH-Wert wird in dem optionalen zweiten Schritt unter Verwendung einer starken Säure, wie beispielsweise konzentrierte Schwefelsäure oder Salzsäure, oder einer starken Base, wie beispielsweise Natron- oder Kalilauge, eingestellt.

Das Verfahren zur Herstellung der erfindungsgemäßen Zusammensetzung zeichnet sich durch seine Einfachheit aus. Insbesondere kann die Zusammensetzung auch direkt vor Ort, beispielsweise in einer Obstbaum- oder Zierpflanzenplantage, durch Zusetzen von Wasser zu dem Konzentrat in einer gebrauchsfähigen Form hergestellt werden. Bei der Herstellung entfallen weitgehend alle bei der Herstellung von anderen Pflanzenschutzmitteln zu berücksichtigenden Sicherheitsmaßnahmen, da keine gefährlichen oder gesundheitsgefährdenden Substanzen zum Einsatz kommen. Aluminiumsalze sind hinsichtlich Handhabbarkeit und Verwendung besonders geeignet, da sie ubiquitär vorkommen, und von ihnen bereits aus diesem Grund keine nennenswerten Gefahren für den Menschen und/oder für die Umwelt ausgehen.

Erfindungsgemäß kann die so hergestellte Zusammensetzung in der Landwirtschaft, in der Forstwirtschaft, im Gartenbau, im Obstbau, in der Vektorenkontrolle, in der Pflanzenanzucht, in der Pflanzenzucht, in generativem und vegetativem Saatgut, im Pflanzgut oder in nichtlandwirtschaftlichen Anwendungen zur Kontrolle oder Bekämpfung von Organismen verwendet werden.

In einem weiteren Aspekt umfasst die vorliegende Erfindung ein Verfahren zur Bekämpfung von Schädlingen bei Pflanzen durch in Berührung bringen der Schädlinge mit der erfindungsgemäßen Zusammensetzung. Vorzugsweise wird durch das Verfahren eine Feuerbranderkrankung bei Obstgehölzen und/oder Zierpflanzen verhindert oder eine bereits aufgetretene Feuerbranderkrankung behandelt.

Als Pflanze kommt jede Pflanze in Betracht, bei der Schädlinge auftreten können. Insbesondere umfasst die vorliegende Erfindung ein Verfahren zur Bekämpfung von Feuerbrand bei Obstgehölzen und Zierpflanzen. Beispiele für Pflanzen, die mit der erfindungsgemäßen Zusammensetzung geschützt oder behandelt werden können, umfassen Apfelbäume (Malus), Birnbäume (Pyrus), Feuerdorn (Pyracantha), Quitte (Cydonia), Stranvaesie (Stranvesia), Sorbus-Arten wie Mehlbeere (Sorbus), Weiß- und Rotdorn (Crategus), Zierquitte (Chaenomeles), Zwergmispel (Cotoneaster), Wollmispel (Eriobotrya) und die Mispel (Mespilus).

Zur Vorbeugung oder Behandlung wird die Zusammensetzung auf eine übliche Weise auf die Pflanze bzw. zumindest einen Pflanzenbestandteil davon aufgebracht. Wichtig ist dabei, dass die Zusammensetzung mit dem Feuerbranderreger *Erwinia Amylovora* in Kontakt gebracht wird, so dass die Zusammensetzung ihre biologische Wirkung entfalten kann. In einer bevorzugten Ausführungsform erfolgt die Aufbringung durch Besprühen oder Bepinseln, vorzugsweise durch Besprühen, der Pflanzen mit der erfindungsgemäßen Zusammensetzung. Das Aufbringen kann vorbeugend oder auch im Falle von bereits mit Feuerbrand befallenen Pflanzen zur Behandlung auf die Pflanzen oder Pflanzenteile aufgetragen werden.

In einer bevorzugten Ausführungsform wird die Zusammensetzung in einer Menge von 50 bis 1.000 L/ha, vorzugsweise in einer Menge von 300 bis 600 L/ha, besonders bevorzugt in einer Menge von 500 L/ha auf die Pflanzen bzw. die Pflanzenbestandteile gesprüht. Diese Auftragungsmenge ermöglicht einen besonders wirtschaftlichen und kostengünstigen Einsatz der Zusammensetzung bei gleichzeitiger sehr guter Wirksamkeit gegen Feuerbrand.

Zur Bekämpfung von primärem Feuerbrand bei Kernobst erfolgt die Behandlung vorzugsweise durch eine bis fünf Auftragungen während der Blütezeit, insbesondere durch zwei bis drei Auftragungen während der Blütezeit.

Zur Bekämpfung des sekundären Feuerbrandes können für Kernobst ab dem Stadium der Bildung der roten Knospen bis zur Vorernte ein bis zehn Anwendungen, vorzugsweise drei bis acht Anwendungen, besonders bevorzugt fünf bis sechs Anwendungen durchgeführt werden.

Die vorliegende Erfindung wird nun anhand einzelner Beispiele und Figuren weiter erläutert. Diese Beispiele und Figuren dienen nur zur Veranschaulichung des allgemeinen erfinderischen Konzepts, ohne dass die Beispiele und Figuren als die Erfindung in irgendeiner Weise einschränkend ausgelegt werden dürfen.

### Kurze Beschreibung der Figur

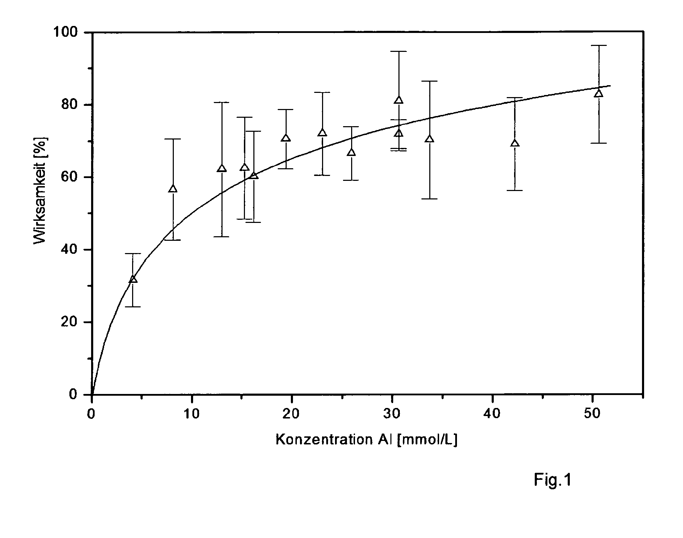

Fig. 1 zeigt die Abhängigkeit der Wirksamkeit der Zusammensetzungen von der Konzentration an Aluminium(III)-Ionen in der Zusammensetzung bei der Behandlung von Feuerbrand auf Apfelblüten.

### Beispiele

### Verwendete Substanzen

Sämtliche eingesetzte Substanzen sind im Handel erhältlich. Die Salze Kaliumaluminiumsulfat-12-hydrat (KAl(SO₄)₂·12H₂O, Reinheitsgrad "rein, Kristallmehl") und Magnesiumchlorid-6-hydrat (MgCl₂·6H₂O, Reinheitsgrad "Ph. Eur.") wurden von der Dr. Paul Lohmann GmbH KG, Emmerthal bezogen. Cremophor EL (Polyoxyethylenglyceroltriricinoleat 35 (DAC), Polyoxyl 35 Castor Oil) ist eine eingetragene Marke des Unternehmens BASF AG. Diese Substanz wurde von Sigma-Aldrich, München bezogen.

### Messung der Wirksamkeit gegen Feuerbrand-Erkrankung

Für die Messung der Wirksamkeit der wässrigen Zusammensetzungen werden 24 Blüten der Apfelsorten Braeburn, Jona Gold und Gala in Zuckerlösung gestellt und mit einer Suspension von *Erwinia amylorova* mit 10⁶ Bakterien inokuliert. Eine Stunde nach Inokulation werden die Blüten jeweils mit der zu testenden Zusammensetzung bzw. mit Wasser als Negativkontrolle besprüht, bis vollständige Benetzung der Blüten eingetreten ist. Die Blüten werden bei 20 bis 23 °C und 100 % relativer Luftfeuchtigkeit für sechs Tage inkubiert. Die Anzahl der Blüten, an welchen sich Bakterienschleim gebildet hat, werden bestimmt. Der Wirkungsgrad beschreibt die Verminderung der befallenen Blüten bei Verwendung der zu testenden Zusammensetzung im Vergleich zu den nur mit Wasser behandelten Blüten. Alle Versuche werden drei- bis sechsmal durchgeführt und aus den Messwerten der empirische Mittelwert des Wirkungsgrades sowie die empirische Standardabweichung σ als arithmetisches Mittel aller quadrierten Abweichungen der Daten von dem arithmetischen Mittelwert des Wirkungsgrades, berechnet.

### Beispiel 1

Kaliumaluminiumsulfat-12-hydrat, Magnesiumchlorid-6-hydrat und Cremophor EL werden in den in der Tabelle 1 angegebenen Konzentrationen gemischt, um ein Konzentrat des Beispiels 1 herzustellen.

**Tabelle 1: Konzentrat des Beispiels 1**

| Bestandteil | Einwaage (Gew.-%) |
|---|---|
| KAl(SO₄)₂·12H₂O | 77,0 |
| MgCl₂·6H₂O | 19,2 |
| Cremophor EL | 3,8 |

Das Konzentrat des Beispiels 1 wird unter Rühren in den in der Tabelle 2 angegebenen Konzentrationen in Wasser aufgelöst. Dabei stellt sich ein pH-Wert von 3,5 bis 3,7 ein. Zusätzlich wird Streptomycin-Lösung durch Auflösen von Streptomycin (0,06 Gew.-%) in Wasser hergestellt. Die Zusammensetzungen werden hinsichtlich der Wirksamkeit gegen Feuerbrand wie oben beschrieben untersucht. Die Ergebnisse sind in der Tabelle 2 zusammengefasst.

**Tabelle 2: Ergebnisse der Zusammensetzungen in Beispiel 1**

| | Konzentration (Gew.-%) | Mittelwert des Wirkungsgrades (%) | Standardabweichung σ vom Mittelwert (%) |
|---|---|---|---|
| Konzentrat | 0,25 | 32 | 7 |
| Konzentrat | 0,50 | 57 | 14 |
| Konzentrat | 1,00 | 60 | 13 |
| Streptomycin | 0,06 | 74 | 5 |

Wie aus der Tabelle 2 ersichtlich ist, konnte mit Zusammensetzungen, welche das Konzentrat des Beispiels 1 in einer Verdünnung von 0,25 bis 1,00 Gew.-% enthalten, die Zahl der befallenen Blüten um bis zu 60 % vermindert werden. Insgesamt reicht die Wirksamkeit der Zusammensetzung beinahe an die Wirksamkeit einer üblichen, 0,06 % Gew.-% Streptomycin enthaltenden Lösung heran.

### Beispiel 2

Ein Konzentrat wird wie in Beispiel 1 beschrieben hergestellt, wobei die in der Tabelle 3 angegebenen Massenanteile verwendet werden.

**Tabelle 3: Konzentrat des Beispiels 2**

| Bestandteil | Massenanteil (Gew.-%) |
|---|---|
| KAl(SO₄)₂·12H₂O | 72,7 |
| MgCl₂·6H₂O | 18,2 |
| Cremophor EL | 9,1 |

Das Konzentrat wird unter Rühren in den in der Tabelle 4 angegebenen Konzentrationen in Wasser aufgelöst, wobei sich ein pH-Wert von 3,5 bis 3,7 einstellt, und die Wirksamkeit der so hergestellten Zusammensetzungen gegen Feuerbrand wird wie oben beschrieben untersucht. Die Ergebnisse sind in der Tabelle 4 zusammengefasst.

**Tabelle 4: Ergebnisse der Zusammensetzungen in Beispiel 2**

| | Konzentration (Gew.-%) | Mittelwert des Wirkungsgrades (%) | Standardabweichung σ vom Mittelwert (%) |
|---|---|---|---|
| Konzentrat | 1,0 | 63 | 14 |
| Konzentrat | 1,5 | 72 | 11 |
| Konzentrat | 2,0 | 81 | 14 |
| Streptomycin | 0,06 | 70 | 1 |

Wie aus der Tabelle 4 ersichtlich ist, konnte mit Zusammensetzungen, welche das Konzentrat des Beispiels 2 in einer Verdünnung von 1 bis 2 Gew.-% enthalten, die Zahl der befallenen Blüten um bis zu 81 % vermindert werden. Insgesamt konnte eine höhere Wirksamkeit als die einer üblichen, 0,06 % Gew.-% Streptomycin enthaltenden Lösung erzielt werden.

### Beispiel 3

Ein Konzentrat wird wie in Beispiel 1 beschrieben hergestellt, wobei die in der Tabelle 5 angegebenen Massenanteile verwendet werden.

**Tabelle 5: Konzentrat des Beispiels 3**

| Bestandteil | Massenanteil (Gew.-%) |
|---|---|
| KAl(SO₄)₂·12H₂O | 61,5 |
| MgCl₂·6H₂O | 30,8 |
| Cremophor EL | 7,7 |

Das Konzentrat wird unter Rühren in den in der Tabelle 6 angegebenen Konzentrationen in Wasser aufgelöst, wobei sich ein pH-Wert von 3,5 bis 3,7 einstellt, und die Wirksamkeit der so hergestellten Zusammensetzungen gegen Feuerbrand wird wie oben beschrieben untersucht. Die Ergebnisse sind in der Tabelle 6 zusammengefasst.

**Tabelle 6: Ergebnisse der Zusammensetzungen in Beispiel 3**

| | Konzentration (Gew.-%) | Mittelwert des Wirkungsgrades (%) | Standardabweichung σ vom Mittelwert (%) |
|---|---|---|---|
| Konzentrat | 1,0 | 62 | 19 |
| Konzentrat | 1,5 | 71 | 8 |
| Konzentrat | 2,0 | 67 | 7 |
| Streptomycin | 0,06 | 70 | 1 |

Wie aus der Tabelle 6 ersichtlich ist, konnte mit Zusammensetzungen, welche das Konzentrat des Beispiels 3 in einer Verdünnung von 1,0 bis 2,0 Gew.-% enthalten, die Zahl der befallenen Blüten um bis zu 71 % vermindert werden. Insgesamt konnte eine höhere Wirksamkeit als die einer üblichen, 0,06 % Gew.-% Streptomycin enthaltenden Lösung erzielt werden.

### Beispiel 4

Ein Konzentrat wird wie in Beispiel 1 beschrieben hergestellt, wobei die in der Tabelle 7 angegebenen Massenanteile verwendet werden.

**Tabelle 7: Konzentrat des Beispiels 4**

| Bestandteil | Massenanteil (Gew.-%) |
|---|---|
| KAl(SO₄)₂·12H₂O | 72,7 |
| MgCl₂·6H₂O | 18,2 |
| Cremophor EL | 9,1 |

Das Konzentrat wird unter Rühren in den in der Tabelle 8 angegebenen Konzentrationen in Wasser aufgelöst, wobei sich ein pH-Wert von 3,5 bis 3,7 einstellt, und die Wirksamkeit der so hergestellten Zusammensetzungen gegen Feuerbrand wird wie oben beschrieben untersucht. Die Ergebnisse sind in der Tabelle 8 zusammengefasst.

**Tabelle 8: Ergebnisse der Zusammensetzungen in Beispiel 4**

| | Konzentration (Gew.-%) | Mittelwert des Wirkungsgrades (%) | Standardabweichung σ vom Mittelwert (%) |
|---|---|---|---|
| Konzentrat | 2,0 | 72 | 4 |
| Streptomycin | 0,06 | 75 | 12 |

Wie aus der Tabelle 8 ersichtlich ist, konnte mit einer Zusammensetzung, welche das Konzentrat des Beispiels 4 in einer Verdünnung von 0,25 Gew.-% enthält, die Zahl der befallenen Blüten um 72 % vermindert werden. Insgesamt reicht die Wirksamkeit der Zusammensetzung an die Wirksamkeit einer üblichen, 0,06 % Gew.-% Streptomycin enthaltenden Lösung heran.

### Beispiel 5

Es werden drei verschiedene Konzentrate A, B und C wie in Beispiel 1 beschrieben hergestellt, wobei die Bestandteile in den in der Tabelle 9 genannten Konzentrationen verwendet werden.

**Tabelle 9: Konzentrate A, B und C des Beispiels 5**

| Bestandteil | Einwaage (g) | | |
|---|---|---|---|
| | Konzentrat A | Konzentrat B | Konzentrat C |
| KAl(SO₄)₂·12H₂O | 16,0 | 20,0 | 24,0 |
| MgCl₂·6H₂O | 4,0 | 5,0 | 6,0 |
| Cremophor EL | 2,0 | 2,0 | 2,0 |

Alle Konzentrate A, B bzw. C wurden jeweils auf 1,0 Liter Wasser unter Rühren verdünnt, um entsprechende Zusammensetzungen A, B bzw. C herzustellen. Der pH-Wert aller so hergestellten Zusammensetzungen liegt jeweils im Bereich von 3,5 bis 3,7. Als Positivkontrolle wird wässrige Streptomycin-Lösung (0,06 Gew.-%) verwendet.

Die Wirksamkeit aller Zusammensetzungen gegen Feuerbrand wurde wie oben beschrieben untersucht. Die Ergebnisse sind in der Tabelle 10 zusammengefasst.

**Tabelle 10: Ergebnisse der Zusammensetzungen in Beispiel 5**

| | Mittelwert des Wirkungsgrad (%) | Standardabweichung σ vom Mittelwert (%) |
|---|---|---|
| A | 70 | 16 |
| B | 69 | 13 |
| C | 83 | 13 |
| Streptomycin | 74 | 4 |

Wie aus der Tabelle 10 ersichtlich ist, konnte mit den Zusammensetzungen A, B und C Wirksamkeiten erreicht werden, welche in etwa der Wirksamkeit einer üblichen, 0,06 Gew.-% Streptomycin enthaltenden Lösung entspricht. Besonders wirksam ist die Zusammensetzung C, mit der eine Reduktion der Anzahl der befallenen Blüten um 83 % erreicht werden konnte.

Die in den Beispielen 1 bis 5 erhaltenen Ergebnisse sind in der Figur 1 grafisch zusammengefasst. Figur 1 verdeutlicht, dass unabhängig von der Konzentration des Feuchthaltemittels und des Spreitmittels eine Abhängigkeit der Wirksamkeit gegen Feuerbrand von der Konzentration an Aluminium(III)-Ionen in der Zusammensetzung besteht. Im Bereich von 5 bis 60 mmol/L, insbesondere im Bereich von 20 bis 60 mmol/L Aluminium(III)-Ionen in der Anwendungslösung entspricht die Wirksamkeit der Zusammensetzung in etwa derjenigen einer üblichen, 0,06 Gew.-% Streptomycin enthaltenden Lösung, wobei jedoch deren Nachteile, wie beispielsweise eine Resistenzbildung in den Mikroorganismen und eine Rückstandsbildung der wirksamen Substanzen im Obst, nicht beobachtet wird.

## Patentansprüche

1. Zusammensetzung zur Behandlung und/oder Vorbeugung des Feuerbrandes enthaltend Aluminium(III)-Ionen in einer Konzentration im Bereich von 5 bis 60 mmol/L in wässriger Lösung, wobei die Zusammensetzung einen pH-Wert im Bereich von 3,0 bis 5,0 aufweist und zusätzlich ein Feuchthaltemittel enthält, wobei das Feuchthaltemittel aus der Liste, bestehend aus Glycerin, Propylenglykol, Polyethylenglykol, Natriumlactat, Kaliumlactat, Calciumlactat, Sorbit, Xylit, Glycerin, Maltit, Invertase, Polydextrose, Magnesiumchlorid-Hexahydrat, Ammoniumchlorid und deren Hydrate, Calciumchlorid und deren Hydrate, Calciumnitrat und deren Hydrate oder Gemische zweier oder mehrerer dieser Substanzen, ausgewählt ist.

2. Zusammensetzung gemäß Anspruch 1, zusätzlich enthaltend ein Spreitmittel in einer Konzentration im Bereich von 0,0025 bis 2 g/L.

3. Zusammensetzung gemäß einem der Ansprüche 1 oder 2, wobei der pH-Wert der wässrigen Lösung im Bereich von 3,3 bis 4,0, liegt.

4. Zusammensetzung gemäß einem der Ansprüche 1 bis 3, zusätzlich enthaltend Sulfat-Ionen in einer Konzentration im Bereich von 7,5 bis 120 mmol/L.

5. Zusammensetzung gemäß einem der Ansprüche 1 bis 4, wobei die Zusammensetzung frei von Phosphor enthaltenden Verbindungen ist.

6. Zusammensetzung gemäß einem der Ansprüche 1 bis 5, wobei die Zusammensetzung ein Pflanzenschutz- oder Schädlingsbekämpfungsmittel darstellt.

7. Verwendung einer Zusammensetzung gemäß einem der Ansprüche 1 bis 6 in der Landwirtschaft, in der Forstwirtschaft, im Gartenbau, im Obstbau, der Vektorenkontrolle, in der Pflanzenanzucht, in der Pflanzenzucht, in generativem und vegetativem Saatgut, im Pflanzgut oder in nichtlandwirtschaftlichen Anwendungen zur Kontrolle oder Bekämpfung von Organismen.

8. Verfahren zur Vorbeugung oder Behandlung von Feuerbrand bei Obstgehölzen und Zierpflanzen, durch in Berührung bringen der Schädlinge mit einer Zusammensetzung gemäß einem der Ansprüche 1 bis 6.

9. Verfahren gemäß Anspruch 8, wobei die Zusammensetzung auf die Pflanzen gesprüht oder gepinselt wird.

10. Verfahren gemäß Anspruch 9, wobei die Zusammensetzung in einer Menge von 50 bis 1.000 L/ha auf die Pflanzen gesprüht wird.

## Claims

1. Composition for treating and/or preventing fire blight, containing aluminum (III) ions in an aqueous solution at a concentration of from 5 to 60 mmol/L, wherein the pH of the composition is within the range of from 3.0 to 5.0, and additionally containing a humectant, wherein the humectant is selected from the list consisting of glycerin, propylene glycol, polyethylene glycol, sodium lactate, potassium lactate, calcium lactate, sorbitol, xylitol, glycerol, maltitol, invertase, polydextrose, magnesium chloride hexahydrate, ammonium chloride and their hydrates, calcium chloride and their hydrates, calcium nitrate and their hydrates or mixtures of two or more of these substances.

2. Composition according to claim 1, additionally containing a spreading agent at a concentration of from 0.0025 to 2 g/L.

3. Composition according to any one of the claims 1 or 2, wherein the pH of said aqueous solution is within the range of from 3.3 to 4.0.

4. Composition according to any one of the claims 1 to 3, additionally containing sulfate ions at a concentration of from 7.5 to 120 mmol/L.

5. Composition according to any one of the claims 1 to 4, wherein said composition is free of phosphorus containing compounds.

6. Composition according to any one of the claims 1 to 5, wherein said composition is a plant protecting agent or a pesticide.

7. Use of a composition according to any one of the claims 1 to 6 in agriculture, in forestry, in gardening, in pomiculture, in vector control, in plant cultivation, in plant breeding, in generative and vegetative seed material, in propagation material, or in non-agricultural applications for controlling, monitoring or combating of organisms.

8. Method for preventing or treating fire blight in fruit trees and ornamental plants, wherein the fire blight causing pests are contacted with a composition according to any one of claims 1 to 6.

9. Method according to claim 8, wherein said composition is sprayed or brushed onto the plants.

10. Method according to claim 9, wherein said composition is sprayed onto the plants in an amount of from 50 to 1,000 L/ha.

## Revendications

1. Composition pour le traitement et/ou la prévention du feu bactérien, contenant des ions d'aluminium (III) dans une concentration de 5 à 60 mmol/l en solution aqueuse, ladite composition ayant une valeur pH comprise entre 3,0 et 5,0 et contenant en outre un agent humectant, ledit agent humectant étant sélectionné dans le groupe composé de glycérine, propylène glycol, polyéthylène glycol, lactate de sodium, lactate de potassium, lactate de calcium, sorbitol, xylitol, glycérine, maltitol, invertase, polydextrose, chlorure de magnésium hexahydraté, chlorure d'ammonium et ses hydrates, chlorure de calcium et ses hydrates, nitrate de calcium et ses hydrates, ou des mélanges de deux ou de plusieurs de ces substances.

2. Composition selon la revendication 1, contenant en outre un agent d'étalement dans une concentration de 0,0025 à 2 g/l.

3. Composition selon la revendication 1 ou la revendication 2, où la valeur pH de la solution aqueuse est comprise entre 3,3 et 4,0.

4. Composition selon l'une des revendications 1 à 3, contenant en outre des ions de sulfate dans une concentration de 7,5 à 120 mmol/l.

5. Composition selon l'une des revendications 1 à 4, ladite composition étant exempte de composés contenant du phosphore.

6. Composition selon l'une des revendications 1 à 5, ladite composition constituant un produit phytosanitaire ou un pesticide.

7. Utilisation d'une composition selon l'une des revendications 1 à 6 pour l'agriculture, la sylviculture, l'horticulture, l'arboriculture fruitière, la lutte anti-vectorielle, les cultures végétales, la sélection végétale, la multiplication générative et végétative, les plantations de semences pré-germées ou pour des applications non agricoles pour le contrôle d'organismes ou la lutte contre ceux-ci.

8. Procédé de prévention ou de traitement du feu bactérien sur des arbres fruitiers et des plantes ornementales, par mise en contact des organismes nuisibles avec une composition selon l'une des revendications 1 à 6.

9. Procédé selon la revendication 8, où la composition est pulvérisée ou appliquée au pinceau sur les végétaux.

10. Procédé selon la revendication 9, où la composition est pulvérisée sur les végétaux dans une teneur de 50 à 1.000 I/ha.
